Europäisches Patentamt

European Patent Office

Office européen des brevets

(19)

(11) **EP 1 117 705 B1**

(12) **EUROPÄISCHE PATENTSCHRIFT**

(45) Veröffentlichungstag und Bekanntmachung des Hinweises auf die Patenterteilung:
**09.02.2005  Patentblatt 2005/06**

(51) Int Cl.7: **C08F 8/04**

(21) Anmeldenummer: **99934711.5**

(86) Internationale Anmeldenummer:
**PCT/EP1999/005148**

(22) Anmeldetag: **20.07.1999**

(87) Internationale Veröffentlichungsnummer:
**WO 2000/005279 (03.02.2000 Gazette 2000/05)**

(54) **VERFAHREN ZUR HYDRIERUNG DER AROMATISCHEN GRUPPEN IN AROMATISCHEN POLYMEREN IN GEGENWART SPEZIELLER KATALYSATOREN**

METHOD FOR HYDROGENATING AROMATIC GROUPS IN AROMATIC POLYMERS IN THE PRESENCE OF SPECIAL CATALYSTS

PROCEDE D'HYDROGENATION DE GROUPS AROMATIQUES DE POLYMERES AROMATIQUES EN PRESENCE DE CATALYSEURS SPECIFIQUES

(84) Benannte Vertragsstaaten:
**AT BE CH CY DE DK ES FI FR GB GR IE IT LI LU MC NL PT SE**

(30) Priorität: **23.07.1998  DE 19833094**

(43) Veröffentlichungstag der Anmeldung:
**25.07.2001  Patentblatt 2001/30**

(73) Patentinhaber:
• **Bayer MaterialScience AG**
  **51368 Leverkusen (DE)**
• **TEIJIN LIMITED**
  **Osaka-shi Osaka (JP)**

(72) Erfinder:
• **WEGE, Volker**
  **D-47799 Krefeld (DE)**
• **RECHNER, Johann**
  **D-47906 Kempen (DE)**

• **ZIRNGIEBL, Eberhard**
  **D-51061 Köln (DE)**

(74) Vertreter: **Klimiuk, Meike**
  **Bayer AG,**
  **Konzernbereich RP**
  **Patente und Lizenzen**
  **51368 Leverkusen (DE)**

(56) Entgegenhaltungen:
**EP-A- 0 378 104          EP-A- 0 814 098**
**WO-A-96/34896          GB-A- 1 513 852**

• **CHEMICAL ABSTRACTS, vol. 119, no. 10, 6. September 1993 (1993-09-06) Columbus, Ohio, US; abstract no. 96524y, Seite 25; XP000400853 & JP 05 039315 A (SHINNETTETSU KAGAKU) 19. Februar 1993 (1993-02-19)**

**Beschreibung**

Gegenstand der Erfindung ist ein Verfahren zur Hydrierung der aromatischen Gruppen aromatischer Polymere, welches dadurch gekennzeichnet ist, daß Metalle der VIII. Nebengruppe zusammen mit einem Träger aus Siliziumdioxid und/oder Aluminiumoxid bzw. deren Mischungen vorliegen. Die Katalysatoren besitzen eine spezielle Porengrößenverteilung. Dadurch lassen sich aromatische Polymere bezüglich ihrer aromatischen Einheiten vollständig und ohne signifikanten Abbau der Molekulargewichte hydrieren.

Die Hydrierung aromatischer Polymere ist bereits bekannt. DE-AS 1 131 885 beschreibt die Hydrierung von Polystyrol in Gegenwart von Katalysatoren und Lösungsmittel. Als Lösungsmittel werden aliphatische und cycloaliphatische Kohlenwasserstoffe, Ether, Alkohole und aromatische Kohlenwasserstoffe erwähnt. Als bevorzugt wird ein Gemisch aus Cyclohexan und Tetrahydrofuran genannt. Siliziumdioxid und Aluminiumoxidträger der Katalysatoren werden allgemein erwähnt, deren physikalisch chemische Struktur wird jedoch nicht beschrieben.

EP-A-322 731 beschreibt die Herstellung von vorwiegend syndiotaktischen Polymeren auf Basis von Vinylcyclohexan, wobei ein Styrol-basierendes Polymer in Gegenwart von Hydrierungskatalysatoren und Lösungsmitteln hydriert wird. Als Lösungsmittel werden cycloaliphatische und aromatische Kohlenwasserstoffe, nicht jedoch Ether, erwähnt.

Die in DE 196 24835 (= EP-A 814 098) zur Hydrierung von Polymeren mit Ruthenium- oder Palladiumkatalysatoren, bei denen das Aktivmetall auf einem porösen Träger aufgebracht ist, beschreibt die Hydrierung von olefinischen Doppelbindungen von Polymeren.

Aromatische Bereiche werden zu weniger als 25 % und im allgemeinen in einem Bereich von 0 bis ungefähr 7 % hydriert. Die Auswahl der Lösungsmittel ist dabei nicht kritisch.

Ferner ist bekannt (WO 96/34896 = US-A-5,612,422), daß kleine Porendurchmesser (200-500 Å) und große Oberflächen (100-500 $m^2$/g) von Siliziumdioxid unterstützten Katalysatoren bei der Hydrierung von aromatischen Polymeren zu unvollständiger Hydrierung und zu Abbau der Polymerkette führen. Die Verwendung spezieller Siliziumdioxid unterstützter Hydrierkatalysatoren (WO 96/34896) lassen eine annähernd vollständige Hydrierung bei ca. 20 % igem Abbau der Molekulargewichte zu. Die genannten Katalysatoren weisen eine spezielle Porengrößenverteilung des Siliziumdioxids auf, die dadurch charakterisiert ist, daß 98 % des Porenvolumens einen Porendurchmesser größer 600 Å haben. Die genannten Katalysatoren haben Oberflächen zwischen 14-17 $m^2$/g und mittlere Porendurchmesser von 3800-3900 Å. Verdünnte Polystyrollösungen in Cyclohexan mit einer Konzentration zwischen 1% bis maximal 8 % werden zu Hydriergraden größer 98 % und kleiner 100 % hydriert.

Die in den genannten Schriften beschriebenen Beispiele zeigen bei Polymerkonzentrationen kleiner 2 % einen Abbau der absoluten Molekulargewichte des hydrierten Polystyrols. Generell führt Molekulargewichtsabbau zu einer Verschlechterung der mechanischen Eigenschaften eines hydrierten Polystyrols.

Das Vergleichbeispiel gemäß WO 96/34896 eines kommerziell verfügbaren Katalysators 5 % Rh/Al$_2$O$_3$ (Engelhard Corp., Beachwood, Ohio, USA) führt zu einem Hydriergrad von 7 % und zeigt die geringere Aktivität des Aluminiumoxidträgers gegenüber dem Siliziumdioxid unterstützten Katalysator.

Überraschenderweise wurde nun gefunden, daß bei der Verwendung spezieller Katalysatoren, welche Metalle der VIII. Nebengruppe zusammen mit einem Träger aus Siliziumdioxid, Aluminiumoxid oder deren Mischung, welche dadurch definiert sind, daß mindestens 10 %, vorzugsweise 15 % des Porenvolumens, gemessen nach der Stickstoffsorptionsmethode gemäß DIN 66134, einen Porendurchmesser kleiner 600 Å aufweisen, einen mittleren Porendurchmesser von höchstens 900 Å, eine BET-Oberfläche von mindestens 40 $m^2$/g besitzen und eine bestimmte Porengrößenverteilung aufweisen, aromatische Polymere vollständig und ohne signifikanten Abbau der Molekulargewichte hydrieren.

Gegenstand der Erfindung ist ein Verfahren zur Hydrierung aromatischer Polymere in Gegenwart von geträgerten Katalysatoren, wobei der Katalysator ein Metall oder Gemisch von Metallen der VIII. Nebengruppe des Periodensystems auf einem Träger aus Siliziumdioxid, Aluminiumoxid oder deren Mischung eingesetzt wird und wobei 15-100 % des Porenvolumen des Katalysators, gemessen nach der Quecksilber-Porosimetrie gemäß DIN 66133, einen Porendurchmesser zwischen 10-100 nm aufweist.

Der mittlere Porendurchmesser beträgt, bestimmt nach Quecksilber-Porosimetrie, bevorzugt höchstens 900 Å.

Die Quecksilbermethode ist jedoch nur hinreichend genau für Poren, die größer als 6 nm (60 Å) sind. Porendurchmesser kleiner 60 nm (600 Å) werden daher durch Stickstoffsorption nach Barret, Joyner, Halenda bestimmt (DIN 66 134).

Die Katalysatoren weisen daher zusätzlich ein Porenvolumen, gemessen nach der Stickstoffsorption von 100 bis 10 %, bevorzugt 80 bis 10 %, insbesondere 70 bis 15 %, für Porendurchmesser kleiner 600 Å auf. Das Porenvolumen, gemessen nach der Stickstoffsorption, bezieht sich auf das gesamte Porenvolumen, gemessen nach der Quecksilber-Porosimetrie.

Die Bestimmung des mittleren Porendurchmessers und der Porengrößenverteilung erfolgt durch Quecksilber-Porosimetrie gemäß DIN 66 133.

Der mittlere Porendurchmesser beträgt im allgemeinen 10 bis 1000 Å, vorzugsweise 50 bis 950 Å, ganz besonders bevorzugt 60 bis 900 Å .

Methoden zur Charakterisierung von Hydrierkatalysatoren werden z.B. in WO 96/34896 (=US-A-5,612,422) und Applied Heterogenous Catalysis, Institute Francais du Petrole Publication, Seite 189-237 (1987) beschrieben.

Die Katalysatoren bestehen aus Metallen der VIII. Nebengruppe, welche zusammen mit einem Träger aus Siliziumdioxid oder Aluminiumoxid bzw. deren Mischungen vorliegen.

Die Oberfläche des Katalysators wird nach BET (Brunauer, Emmett und Teller) Verfahren durch Stickstoff, Adsorption, gemäß DIN 66 131 und DIN 66 132 bestimmt.

Die spezifische Stickstoff-Oberflächen (BET) betragen im allgemeinen 40 bis 800 $m^2$/g, vorzugsweise 50 bis 600 $m^2$/g.

Verwendet werden im allgemeinen Metalle der VIII. Nebengruppe, vorzugsweise Nickel, Platin, Ruthenium, Rhodium, Palladium, insbesondere Platin, Palladium und Nickel.

Der Metallgehalt beträgt, bezogen auf das Gesamtgewicht des Katalysators, im allgemeinen 0,01 bis 80 %, vorzugsweise 0,05 bis 70 %.

Der 50 % Wert der kumulativen Verteilung der Partikelgröße beträgt im diskontinuierlich betriebenen Prozeß im allgemeinen 0.1 µm bis 200 µm, vorzugsweise 1 µm bis 100 µm, ganz besonders bevorzugt 3 µm bis 80 µm.

Übliche Lösungsmittel für Hydrierreaktionen sind aliphatische oder cycloaliphatische Kohlenwasserstoffe, aliphatische oder cycloaliphatische gesättigte Ether oder deren Gemische, z.B. Cyclohexan, Methylcyclopentan, Methylcyclohexan, Ethylcyclohexan, Cyclooctane, Cycloheptan, Dodecan, Dioxan, Diethylenglycoldimethylether, Tetrahydrofuran, Isopentan, Decahydronaphthalin.

Werden aliphatische oder cycloaliphatische Kohlenwasserstoffe als Lösungsmittel verwendet, so enthalten diese vorzugsweise Wasser in einer Menge im allgemeinen von 0,1 ppm bis 500 ppm, vorzugsweise 0,5 ppm bis 200 ppm, ganz besonders bevorzugt 1 ppm bis 150 ppm, zum gesamten Lösungsmittel.

Das erfindungsgemäße Verfahren führt im allgemeinen zu einer praktisch vollständigen Hydrierung der aromatischen Einheiten. In der Regel ist der Hydriergrad ≥ 80 %, vorzugsweise ≥ 90 %, ganz besonders bevorzugt ≥ 99 % bis 100 %. Der Hydriergrad läßt sich beispielsweise durch NMR oder UV-Spektroskopie bestimmen. Das erfindungsgemäße Verfahren führt ganz besonders bevorzugt zu hydrierten aromatischen Polymeren, insbesondere zu Polyvinylcyclohexan, wobei die Menge an Diaden mit syndiotaktischer Konfiguration größer 50,1 % kleiner 74 %, insbesondere 52 bis 70 %, beträgt.

Als Ausgangsstoffe werden aromatische Polymere eingesetzt, welche beispielsweise ausgewählt sind aus gegebenenfalls im Phenylring oder an der Vinylgruppe substituiertem Polystyrol oder Copolymere davon mit Monomeren, ausgewählt aus der Gruppe der Olefine, (Meth)acrylate oder Gemische davon. Weitere geeignete Polymere sind aromatische Polyether insbesondere Polyphenylenoxid, aromatische Polycarbonate, aromatische Polyester, aromatische Polyamide, Polyphenylene, Polyxylylene, Polyphenylenvinylene, Polyphenylenethylene, Polyphenylensulfide, Polyaryletherketone, aromatische Polysulfone, aromatische Polyethersulfone, aromatische Polyimide sowie deren Mischungen, Copolymere, gegebenenfalls Copolymere mit aliphatischen Verbindungen.

Als Substituenten im Phenylring kommen $C_1$-$C_4$-Alkyl, wie Methyl, Ethyl, $C_1$-$C_4$-Alkoxy, wie Methoxy, Ethoxy, ankondensierte Aromaten, die über ein Kohlenstoffatom oder zwei Kohlenstoffatome mit dem Phenylring verbunden sind, mit Phenyl, Biphenyl, Naphthyl in Frage.

Als Substituenten an der Vinylgruppe kommen $C_1$-$C_4$-Alkyl, wie Methyl, Ethyl, n-oder iso-Propyl in Frage, insbesondere Methyl in α-Position.

Als olefinische Comonomere kommen Ethylen, Propylen, Isopren, Isobutylen Butadien, Cyclohexadien, Cyclohexen, Cyclopentadien, gegebenenfalls substituierte Norbornene, gegebenenfalls substituierte Dicyclogentadiene, gegebenenfalls substituierte Tetracyclododecene, gegebenenfalls substituierte Dihydrocyclopentadiene,
$C_1$-$C_8$-, vorzugsweise $C_1$-$C_4$-Alkylester der (Meth)acrylsäure, vorzugsweise Methyl- und Ethylester
$C_1$-$C_8$-, vorzugsweise $C_1$-$C_4$-Alkylether des Vinylalkohols, vorzugsweise Methyl und Ethylether,
$C_1$-$C_8$-, vorzugsweise $C_1$-$C_4$-Alkylester des Vinylalkohols, vorzugsweise Vinylacetat,

Derivate der Maleinsäure, vorzugsweise Maleinsäureanhydrid, Derivate des Acrylnitrils, vorzugsweise Acrylnitril und Methacrylnitril in Frage.

Bevorzugte Polymere sind Polystyrol, Polymethylstyrol, Copolymere aus Styrol und mindestens einem weiteren Monomer, ausgewählt aus der Gruppe bestehend aus α-Methylstyrol, Butadien, Isopren, Acrylnitril, Methylacrylat, Methylmethacrylat, Maleinsäureanhydrid und Olefine wie beispielsweise Ethylen und Propylen. In Frage kommen beispielsweise Copolymere aus Acrylnitril, Butadien und Styrol, Copolymere aus Acrylester, Styrol und Acrylnitril, Copolymere aus Styrol und α-Methylstyrol und Copolymere aus Propylen, Dien und Styrol.

Die aromatischen Polymere haben im allgemeinen Molekulargewichte (Gewichtsmittel) Mw von 1000 bis 10,000,000, vorzugsweise von 60000 bis 1000000, besonders bevorzugt 70000 bis 600000, insbesondere 100 000 bis 480 000, bestimmt durch Lichtstreuung.

Die Polymere können eine lineare Kettenstruktur besitzen als auch durch Co-Einheiten Verzweigungsstellen aufweisen (z.B. Propfcopolymere). Die Verzweigungszentren beinhalten z.B. sternförmige Polymere oder andere geometrische Formen der primären, sekundären, tertiären, ggf. quartären Polymerstruktur.

Die Copolymere können sowohl statistisch, alternierend als auch als Blockcopolymere vorliegen.

Blockcopolymere beinhalten Di-Blöcke, Tri-Blöcke, Multi-Blöcke und sternförmige Blockcopolymere.

Die Ausgangspolymere sind allgemein bekannt (z.B. WO 94/21 694).

Die einzusetzende Menge an Katalysator ist beispielsweise in WO 96/34896 beschrieben.

Die einzusetzende Menge des Katalysators hängt von dem auszuführenden Prozeß ab; dieser kann kontinuierlich, halb-kontinuierlich oder diskontinuierlich durchgeführt werden.

Im kontinuierlichen System ist die Reaktionszeit wesentlich kürzer; sie wird von den Abmessungen des Reaktionsgefäßes beeinflußt. Bei der kontinuierlichen Abeitsweise sind das Rieselsystem und das Sumpfsystem, beide mit fest angeordneten Katalysatoren, ebenso möglich wie ein System mit suspendiertem und z.B. im Kreis geführten Katalysator. Die festangeordneten Katalysatoren können in Tablettenform oder als Extrudate vorliegen.

Die Polymerkonzentrationen, bezogen auf das Gesamtgewicht aus Lösungsmittel und Polymer betragen im diskontinuierlichen Prozeß im allgemeinen 80 bis 1, vorzugsweise 50 bis 10, insbesondere 40 bis 15 Gew.-%.

Die Reaktion wird im allgemeinen bei Temperaturen zwischen 0 und 500°C, vorzugsweise zwischen 20 und 250°C, insbesondere zwischen 60 und 200°C, durchgeführt.

Die Reaktion wird im allgemeinen bei Drücken von 1 bar bis 1000 bar, vorzugsweise 20 bis 300 bar, insbesondere 40 bis 200 bar, durchgeführt.

Die Katalysatoren können sowohl reduziert als auch unreduziert in der betreffenden Reaktion eingesetzt werden. Für ein technisches Verfahren ist es weitaus günstiger den Katalysator unreduziert einzusetzen und keinen zusätzlichen teuren Reduktionsschritt des Katalysators wie in WO 96/34 896 durchzuführen.

**Beispiele:**

Durch Lichtstreuung werden die absoluten Molgewichte $\overline{M}$w (Gewichtsmittel) des Ausgangspolymers und des hydrierten Produktes bestimmt. Membranosmose liefert die absoluten Molekulargewichte $\overline{M}$n (Zahlenmittel). In den Beispielen 2 und 3 entsprechen im Rahmen der Meßgenauigkeit die relativen Werte der GPC-Messung (Gel-Permeations-Chromatographie) gegenüber Polystyrolstandards den ermittelten absoluten Molekulargewichten des eingesetzten Polystyrols.

**Beispiele 1-3**

Die in den Beispielen verwendeten Katalysatoren sind in Tabelle 1 charakterisiert.

Ein 11-Autoklave wird mit Inertgas gespült. Die Polymerlösung und gegebenenfalls der unreduzierte Katalysator werden zugegeben (Tabelle 2). Nach dem Verschließen wird mehrmals mit Schutzgas, dann mit Wasserstoff beaufschlagt. Nach dem Entspannen wird der jeweilige Wasserstoffdruck eingestellt und der Ansatz unter Rühren auf die entsprechende Reaktionstemperatur geheizt. Der Reaktionsdruck wird nach Einsetzen der Wasserstoffaufnahme konstant gehalten.

Die Reaktionszeit ist definiert vom Aufheizen des Ansatzes bis zu der Zeit wenn die Wasserstoffaufnahme ihrem Sättigungswert zustrebt.

Nach beendeter Reaktion wird die Polymerlösung filtriert. Das Produkt wird in Methanol gefällt und getrocknet. Das isolierte Produkt zeigt die in der Tabelle aufgeführten physikalischen Eigenschaften.

## Tabelle 1

Physikalische Charakterisierung der eingesetzten Katalysatoren

| Katalysator-Nr. | Stickstoff-Porenvolumen für Porenduchmesser von $<600\,\text{Å}$ mm³/g | Gesamtes Quecksilber-Porenvolumen für Porendurchmesser von $36,8\,\text{Å} - 13\,\mu\text{m}$ mm³/g | Quecksilber-Porenvolumen für Porendurch-messer von $100\,\text{Å} - 1000\,\text{Å}$ mm³/g | $N_2$ Porenvolumen für Porendurch-messer von $<600\,\text{Å}$ / gesamtes Quecksilber Poren-volumen % | Porenvolumen für Porenduchmesser $100\,\text{Å} - 1000\,\text{Å}$ / gesamtes Quecksilber Poren-volumen % | mittlere Poren durchmesser[1] Å | spezifische Gesamt-ober-fläche (BET)[2] m²/g | Metallgehalt % |
|---|---|---|---|---|---|---|---|---|
| 1 | 780 | 2090 | 670 | 37 | 32 | 547 [3] | 61 | 0,9 |
| 2 | 770 | 2060 | 640 | 37 | 31 | 560 [3] | 62 | 0,9 |
| 3 | 590 | 1658 | 460 | 36 | 28 | 507 | 144 | 60,5 |

Katalysator Nr. 1:   Engelhard De Meern, Niederlande, C 586-301, Platin auf Siliziumdioxid

Katalysator Nr. 2:   Engelhard De Meern, Niederlande, C 586-300, Palladium auf Siliziumdioxid

Katalysator Nr. 3:   Engelhard De Meern, Niederlande, C 368-12, Nickel auf Aluminiumoxid

1)   mittlere Porendurchmesser, gemessen nach Quecksilber Porosimetrie (DIN 66133)

2)   spezifische Stickstoff Gesamtoberfläche nach Brunauer, Emmett und Teller (BET, DIN 66131, DIN 66132)

3)   Bei der Berechnung des mittleren Porendurchmessers wurde das Zwischenkornvolumen auf Grund der Partikel fi Porendurchmesser $>1\,\mu\text{m}$ nicht berücksichtigt.

**Tabelle 2**

Hydrierung von Polystyrol in Abhängigkeit des Katalysators, Lösungsmittelsystems und der Reaktionstemperatur

| Beispiel-Nr. | Katalysator[3] | Polymer Masse g | Lösungs-Mittel ml | Katalysator Masse g | Reaktions-Temperatur °C | $H_2$-Druck bar | Reaktions-zeit min | Hydrier-grad[1] % | Tg (DSC) °C | Mn $10^3$ g/mol | Mw $10^3$ g/mol |
|---|---|---|---|---|---|---|---|---|---|---|---|
| 1 Vergleich US-A 5612422 | Pt/SiO$_2$ | 200 $\bar{M}_w \sim$ 200000 g mol$^{-1}$ | 2300 CYH | 13,5 | 150 | 875 (psig) | 110 | 98,4 | 146,6 | - | - |
| 2 erfindungs-gemäß | Pt/SiO$_2$ | 100,2 [2] | 300 CYH | 12,5 | 200 | 100 | 37 | 100 | 149 | 79,1 | 182,8 |
| 3 erfindungs-gemäß | Pd/SiO$_2$ | 100,2 [2] | 300 CYH | 12,5 | 200 | 100 | 125 | 100 | 147 | 78,4 | 184,7 |
| 4 erfindungs-gemäß | Ni/Al$_2$O$_3$ | 100,2 [2] | 300 CYH | 12,5 | 170 | 100 | 200 | 100 | 148 | 71,1 | 169,2 |

[1] Ermittelt durch $^1$H-NMR Spektroskopie

[2] Polystyrol Type 158 k, $\bar{M}w$ = 280.000 g/mol, BASF AG, Ludwigshafen, Deutschland

[3] Engelhard De Meern, Niederlande, Nickel auf Aluminiumoxid, C 368-12, reduziert und stabilisiert
Engelhard De Meern, Niederlande, Platin auf Siliziumdioxid, C 586-301
Engelhard De Meern, Niederlande, Palladium auf Siliziumdioxid, C 586-300

CYH = Cylcohexan

EP 1 117 705 B1

Der Platin-Katalysator (Tabelle 2), der dadurch charakterisiert ist, daß 98 % des Porenvolumens einen Porendurchmesser größer 600 Å aufweist, hydriert Polystyrol bei 150°C nach 110 min nicht vollständig. (98,4 % Vergleichsbeispiel 1).

Die in US-A 5,612,422 beschriebenen Katalysatoren führen zu einem ca. 20 %igen Abbau der Molekulargewichte $\overline{M}_w$.

Die spezielle Porengrößenverteilung des Katalysators der vorliegenden Erfindung zeigt für den Platin Katalysator gegenüber Vergleichsbeispiel 1 bedeutend kürzere Reaktionszeiten bei höherem Molekulargewicht des eingesetzten Polystyrols und höherer Polymerkonzentration (Beispiel 2).

Die gemessenen Molekulargewichte der vollständig hydrierten Produkte entsprechen auch bei hohen Reaktionstemperaturen im Rahmen der Meßgenauigkeit denen der eingesetzten Polystyrole (Beispiel 2, 3).

Die erfindungsgemäße Hydrierung in Gegenwart des Nickelkatalysators kann ebenfalls bei höheren Temperaturen ohne signifikanten Molekulargewichtsabbau und vollständiger Hydrierung bei ausreichender Reaktionsgeschwindigkeit durchgeführt werden (Beispiel 4).

## Patentansprüche

1.    Verfahren zur Hydrierung der aromatischen Gruppen aromatischer Polymere in Gegenwart von geträgerten Katalysatoren, wobei der Katalysator ein Metall oder Gemisch von Metallen der VIII. Nebengruppe des Periodensystems auf einem Träger aus Siliziumdioxid, Aluminiumoxid oder deren Mischung eingesetzt wird und wobei 15-100 % des Porenvolumen des Katalysators, gemessen nach der Quecksilber-Porosimetrie gemäß DIN 66133, einen Porendurchmesser zwischen 10-100 nm aufweist

2.    Verfahren gemäß Anspruch 1, wobei das Porenvolumen 90 bis 20 %, bezogen auf das gesamte Porenvolumen, beträgt.

3.    Verfahren gemäß Anspruch 1, wobei das Porenvolumen 80 bis 25 %, bezogen auf das gesamte Porenvolumen, beträgt.

4.    Verfahren gemäß Anspruch 1, wobei das Porenvolumen 70 bis 25 %, bezogen auf das gesamte Porenvolumen, beträgt.

5.    Verfahren gemäß Anspruch 1, wobei die Metalle ausgewählt sind aus Nickel, Platin, Ruthenium, Rhodium und Palladium.

6.    Verfahren gemäß Anspruch 1, wobei die Metalle ausgewählt sind aus Nickel, Palladium und Platin.

7.    Verfahren gemäß Anspruch 1, wobei das Verfahren in Gegenwart von Hydrierreaktionen verwendbaren Lösungsmittel durchgeführt wird.

8.    Verfahren gemäß Anspruch 7, wobei die Lösungsmittel einen Wassergehalt von 0,1 bis 500 ppm haben.

9.    Verfahren gemäß Anspruch 8, wobei der Wassergehalt 0,5 bis 200 ppm beträgt.

10.    Verfahren gemäß Anspruch 9, wobei der Wassergehalt 1 bis 150 ppm beträgt.

## Claims

1.    Process for hydrogenating the aromatic groups of aromatic polymers in the presence of supported catalysts, wherein the catalyst is a metal or mixture of metals from Group VIII of the Periodic Table on a support of silicon dioxide, aluminium oxide or a mixture thereof, and wherein 15-100% of the pore volume of the catalyst, measured by mercury porosimetry in accordance with DIN 66133, has a pore diameter of between 10 and 100 nm.

2.    Process according to claim 1, wherein the pore volume is from 90 to 20%, in relation to the total pore volume.

3.    Process according to claim 1, wherein the pore volume is from 80 to 25%, in relation to the total pore volume.

**4.** Process according to claim 1, wherein the pore volume is from 70 to 25%, in relation to the total pore volume.

**5.** Process according to claim 1, wherein the metals are selected from among nickel, platinum, ruthenium, rhodium and palladium.

**6.** Process according to claim 1, wherein the metals are selected from among nickel, palladium and platinum.

**7.** Process according to claim 1, wherein the process is carried out in the presence of solvents which are usable in hydrogenation reactions.

**8.** Process according to claim 7, wherein the solvents have a water content of from 0.1 to 500 ppm.

**9.** Process according to claim 8, wherein the water content is from 0.5 to 200 ppm.

**10.** Process according to claim 9, wherein the water content is from 1 to 150 ppm.


**Revendications**

**1.** Procédé d'hydrogénation de groupes aromatiques de polymères aromatiques en présence de catalyseurs supportés, où le catalyseur, un métal ou mélange de métaux du groupe secondaire VIII du système périodique est mis en oeuvre sur un support en dioxyde de silicium, oxyde d'aluminium ou leurs mélanges et où 15-100% du volume des pores du catalyseur, mesuré par la porosimétrie au mercure selon DIN 66133, présente un diamètre de pore allant de 10 à 100 nm.

**2.** Procédé suivant la revendication 1, où le volume des pores se situe dans l'intervalle allant de 90 à 20%, sur base de volume total des pores.

**3.** Procédé suivant la revendication 1, où le volume des pores se situe dans l'intervalle allant de 80 à 25%, sur base de volume total des pores.

**4.** Procédé suivant la revendication 1, où le volume des pores se situe dans l'intervalle allant de 70 à 25%, sur base de volume total des pores.

**5.** Procédé suivant la revendication 1, où les métaux sont choisis parmi le nickel, le platine, le ruthénium, le rhodium et le palladium.

**6.** Procédé suivant la revendication 1, où les métaux sont choisis parmi le nickel, le palladium et le platine.

**7.** Procédé suivant la revendication 1, où le procédé est réalisé en présence de solvants pouvant être utilisés dans des réactions d'hydrogénation.

**8.** Procédé suivant la revendication 7, où les solvants ont une teneur en eau allant de 0,1 à 500 ppm.

**9.** Procédé suivant la revendication 8, où la teneur en eau se situe dans l'intervalle allant de 0,5 à 200 ppm.

**10.** Procédé suivant la revendication 9, où la teneur en eau se situe dans l'intervalle allant de 1 à 150 ppm.